Europäisches Patentamt

European Patent Office

Office européen des brevets

(19)

(11) Publication number: **0 116 585**
**B1**

# EUROPEAN PATENT SPECIFICATION

(12)

(45) Date of publication of patent specification: **15.10.86**

(51) Int. Cl.⁴: **A 23 K 1/22,** A 23 K 1/18

(21) Application number: **83902628.3**

(22) Date of filing: **01.08.83**

(86) International application number:
**PCT/US83/01166**

(87) International publication number:
**WO 84/00669 01.03.84 Gazette 84/06**

(54) **FEED SUPPLEMENT FOR RUMINANT ANIMALS AND METHOD FOR USING SAME.**

(30) Priority: **16.08.82 US 408402**

(43) Date of publication of application:
**29.08.84 Bulletin 84/35**

(45) Publication of the grant of the patent:
**15.10.86 Bulletin 86/42**

(84) Designated Contracting States:
**CH DE FR GB LI NL**

(56) References cited:
**GB-A-1 267 714**
**US-A-2 687 354**

(73) Proprietor: **EASTMAN KODAK COMPANY**
**343 State Street**
**Rochester New York 14650 (US)**

(72) Inventor: **AMES, Stanley, Richard**
**61 Biltmore Drive**
**Rochester, NY 14617 (US)**
Inventor: **PAPAS, Andreas, Michael**
**92 Everwild Lane**
**Rochester, NY 14616 (US)**

(74) Representative: **Parent, Yves et al**
**Kodak-Pathé Département Brevets et Licences**
**Centre de Recherches et de Technologie Zone Industrielle**
**F-71102 Chalon-sur-Saone Cédex (FR)**

Courier Press, Leamington Spa, England.

## Description

This invention relates to a composition for feeding ruminant animals and to a method for feeding such animals.

The ruminant animal lives on ingested forage consisting of large amounts of cellulose which it cannot digest directly. Instead of direct conversion of the forage, the ruminant animal has evolved a symbiotic relationship with microorganisms, consisting of a variety of bacteria and protozoa. The bacteria digest forage for their own survival and growth and the host ruminant later digests the microorganisms and their by-products.

Just as the ruminant animal requires certain preformed nutrients for its growth, the microorganisms upon which it depends for cellulose digestion have their own requirements for essential nutrients. M. P. Bryant and I. M. Robinson (*J. Bacteriol.*, 1962, *84*:605) studied the effect of certain compositions, including a mixture of acetic acid, isobutyric acid, valeric acid, isovaleric acid, and 2-methylbutyric acid on essential nutrition for the growth of ruminant microorganisms.

Ruminant nutritionists have shown that during the digestive process, in the rumen of cattle, bacteria break down feed protein to ammonia and fatty acids. The bacteria then use the ammonia to synthesize cellular protein. These bacteria pass from the rumen to the abomasum and the intestine where they are digested and serve as the major source of protein for maintenance of body tissues and for milk production. Extensive studies on the nutrition of rumen bacteria have shown that fiber-digesting bacteria require certain isoacids, such as isobutyric acid, as well as ammonia for synthesis of bacterial protein. (*Dairy Notes*, Nov., 1973, p. 7, Dr. Robert M. Cook, Michigan State University, published by the Cooperative Extension Service). Without isoacids, urea or $NH_3$ cannot be utilized by these rumen bacteria. For many years cattle rations have been supplemented with nonprotein nitrogen in the form of urea or ammonia.

U.S. Patent 3,564,098 discloses a method of improving growth response in ruminants which comprises orally administering certain acids, including valeric acid. Also, U.S. Patent 3,982,028 discloses that volatile fatty acids are absorbed through the rumen walls and are utilized by the animal as primary energy sources. The effects of isoacids (isobutyric, isovaleric, 2-methylbutyric and valeric on milk production were reported in *1980 J. Dairy Sci., 63*:1098—1103.

In European Patent Publication No. 70,868, published 19 August, 1982, there is disclosed a feed supplement composition which comprises the ammonium salts of a mixture of "isoacids" (isobutyric, valeric, isovaleric and 2-methyl butyric acids). While this composition is an improvement over the art, it is an object of the present invention to provide a feed supplement which is further improved. For example, while the ammonium salts have less odor than the corresponding acids, a still further reduction in odor was desirable. Further, the ammonium salts are liquids under most conditions and compositions which are solids are more easily handled and blended with regular feeds.

The present invention provides an improved feed composition comprising the reaction product of the corresponding aldehyde of the volatile fatty acids and a nonprotein nitrogen source. More particularly, there is provided a feed composition for ruminant animals comprising

a) 8 to 84% by weight of the reaction product of nonprotein nitrogen source and isobutyraldehyde, and

b) 92 to 16% by weight of a component having

3 to 63% by weight of the reaction product of nonprotein nitrogen source and valeraldehyde,

5 to 51% by weight of the reaction product of nonprotein nitrogen source and isovaleraldehyde, and

3 to 67% by weight of the reaction product of nonprotein nitrogen source and 2-methyl-butyraldehyde.

Further, this invention provides a method of feeding ruminant animals which comprises orally administering the above-described composition.

The reaction products of a nonprotein nitrogen source, such as urea, and these particular aldehydes possess certain outstanding characteristics not enjoyed by the corresponding acids or ammonium salts. These characteristics include reduced odor, providing improved palatability for animals, and relatively slow release of urea, providing improved utilization of the active components of the compositions. Also, since the compositions are solids, they are easily handled and blended with regular feeds.

Following is a table of the various abbreviations used herein:

| | |
|---|---|
| VFA | C-4 and C-5 volatile fatty acids |
| NPN | nonprotein nitrogen |
| iso-C-4 | isobutyraldehyde |
| C-5 | valeraldehyde |
| iso-C-5 | isovaleraldehyde   } C-5 aldehydes |
| Me C-4 | 2-methylbutyraldehyde |

NPN sources which may be used include ammonia, urea, ethanolamine, biuret and aliphatic amines having 1 to 5 carbon atoms. Urea is preferred.

According to this invention, there is provided a composition comprising a mixture of the reaction products of certain NPN sources and is O-C-4, iso-C-5, C-5 and Me C-4, (hereinafter sometimes called "reaction product mixture") which, when used in certain ratios in the mixture, provides improved milk production and weight gain in ruminant animals when fed in quantities of about 10 to about 250 grams (anhydrous) per day. For beef cattle, improved gain and feed efficiency is observed when fed in quantities of 10 to 200 grams per day. For dairy cattle, improved milk production is observed when fed in quantities of 50 to 300 grams (anhydrous) per day.

To demonstrate that aldehydes metabolize to the corresponding alcohols and volatile fatty acids, aldehydes were added to inactive (no microbial activity) or active *in vitro* fermentors with and without substance. Me C-4 was added only to active fermentors with substance. Control fermentors (no aldehydes added) were processed the same as the test fermentors. Supernatants obtained from the control and test fermentors were analyzed for aldehydes, alcohols and volatile fatty acids. The addition of the C-4 and· C-5 aldehydes to inactive fermentors had little or no effect on volatile fatty acid concentration and the aldehydes remained unchanged. The concentrations of the corresponding volatile fatty acids were increased in excess of 100% over the controls in the test fermentors. Thus, it is expected that the advantageous effects of feeding the ammonium salt composition to ruminant animals shown in European Patent Publication 70,868 will be achieved using the composition of the present invention. This is because both compositions are metabolized to the same product.

Usually, the quantity of iso-C-4 reaction product is 8 to 84%, preferably 14 to 66% and, most preferably, 21 to 50%, by weight of the composition, and the quantity of C-5 reaction product will be 92 to 16%, preferably 86 to 34% and, most preferably, 79 to 50%, by weight of the composition.

The reaction products providing the second component of the feed supplement composition, i.e., the 5-carbon aldehyde component, are used in amounts of at least 3%, preferably at least 7% and, most preferably, at least 13%, by weight, of the component. More specifically, the *n*-valeraldehyde reaction product is used in an amount in the range of 3 to 63%, preferably 9 to 58% and, most preferably, 16 to 51%, by weight; the isovaleraldehyde reaction product is used in an amount in the range of 3 to 51%, preferably 7 to 46% and, most preferably, 13 to 41%, by weight, and the 2-methylbutyraldehyde reaction product is used in an amount in the range of 3 to 67%, preferably 9 to 61%, and, most preferably, 17 to 54%, by weight. The weight percentages described herein, unless otherwise specified, are on a substantially anhydrous weight basis, as is conventional in this art.

The reaction products may be admixed with conventional dry feeds, feed concentrates or feed supplements. Other convention methods of oral administration can be used. Although small quantities of the reaction product mixture may be fed as a supplement to ruminant animals, doses within the range of 10 to 150 grams of the anhydrous composition per animal per day are most effective.

The reaction product mixture can be prepared by reacting, in a conventional manner well known in the art, an NPN source such as urea with the iso-C-4 and C-5 aldehydes.

The aldehydes may be reacted with the NPN sources individually or in mixture. Normally, in the case for urea, for example, the aldehyde(s) are added under vigorous stirring to a solution of urea. The precipitate formed is filtered and dried. U.S. Patent 3,870,755 discloses a method for producing such compositions.

The following example is submitted for a better understanding of the invention.

### Example 1

An aldehyde mixture consisting of 18.02% isovaleraldehyde, 19.99% 2-methyl-butyraldehyde, 29.99% valeraldehyde and 32% isobutyraldehyde was prepared. This mixture was reacted with urea as disclosed in U.S. Patent 3,870,755, i.e., the aldehydes were added with vigorous stirring to an aqueous urea solution and condensed in liquid phase. The molar ratio of aldehyde to urea was 1:2 or more. The precipitate produced was filtered and dried to produce the feed supplement of the invention.

The dried precipitate was evaluated for odor by a panel of experienced observers in comparison with a feed supplement comprising the corresponding ammonium salts. It was found that the feed supplement of the invention had much less objectionable odor than did the ammonium salts.

### Claims

1. A feed composition for ruminant animals comprising
a) 8 to 84% by weight of the reaction product of nonprotein nitrogen source and isobutyraldehyde, and
b) 92 to 16% by weight of a component having
3 to 63% by weight of the reaction product of nonprotein nitrogen source and valeraldehyde,
5 to 51% by weight of the reaction product of nonprotein nitrogen source and isovaleraldehyde, and
3 to 67% by weight of the reaction product of nonprotein nitrogen source and 2-methyl-butyraldehyde;
the nonprotein nitrogen source being chosen from ammonia, urea, ethanolamine, biuret and aliphatic amines having 1 to 5 carbon atoms.

2. A composition according to claim 1 wherein the amount of the isobutyrate aldehyde reaction product is 21 to 50%, by weight, and the amount of component b) is 50 to 79% by weight.

3. A composition according to either of claims 1 or 2, wherein the amount of each component b) is at least 7%, by weight.

4. A composition according to either of claims 1 or 2, wherein the amount of each component b) is at least 13%, by weight.

5. A feed for ruminant animals comprising a composition of any of claims 1, 2, 3 or 4.

6. A feed according to claim 5 which also includes corn silage, hay, corn grain and urea.

7. A method of feeding a ruminant animal which comprises orally administering to the animal a composition according to any of claims 1, 2, 3 or 4.

8. A method according to claim 7 wherein 10 to 150 grams per day of the composition is fed to the animal.

**Patentansprüche**

1. Futterzusatz für Wiederkäuer aus
a) 8 bis 84 Gew.-% des Reaktionsproduktes aus einem nichtproteinischen Stickstofflieferanten und Isobutyraldehyd und
b) 92 bis 16 Gew.-% einer Komponente aus 3 bis 63 Gew.-% des Reaktionsproduktes aus einem nicht-proteinischen Stickstofflieferanten und Valeraldehyd,

5 bis 51 Gew.-% des Reaktionsproduktes aus einem nicht-proteinischen Stickstofflieferanten und Isovaleraldehyd und

3 bis 67 Gew.-% des Reactionsproduktes eines nicht-proteinischen Stickstofflieferanten und 2-Methylbutyraldehyd;
wobei der nicht-proteinische Stickstofflieferant ausgewählt ist aus: Ammoniak, Harnstoff, Ethanolamin, Biuret und aliphatischen Aminen mit 1 bis 5 Kohlenstoffatomen.

2. Zusatz nach Anspruch 1, dadurch gekennzeichnet, daß die Konzentration des Isobutyraldehydreaktionsproduktes bei 21 bis 50 Gew.-% liegt und die Konzentration der Komponente b) 50 bis 79 Gew.-% beträgt.

3. Zusatz nach einem der Ansprüche 1 oder 2, dadurch gekennzeichnet, daß die Konzentration an jeder Komponente b) bei mindestens 7 Gew.-% liegt.

4. Zusatz nach einem der Ansprüche 1 oder 2, dadurch gekennzeichnet, daß die Konzentration an jeder Komponente b) bei mindestens 13 Gew.-% liegt.

5. Futtermittel für Wiederkäuer, dadurch gekennzeichnet, daß es einen Zusazt nach einem der Ansprüche 1, 2, 3 oder 4 enthält.

6. Futtermittel nach Anspruch 5, dadurch gekennzeichnet, daß es ferner Mais-Silage, Heu, Maiskörner und Harnstoff enthält.

7. Verfahren zum Füttern von Wiederkäuern, dadurch gekennzeichnet, daß man den Tieren oral einen Zusatz nach einem der Ansprüche 1, 2, 3, oder 4 verabfolgt.

8. Verfahren nach Anspruch 7, dadurch gekennzeichnet, daß man den Tieren pro Tag 10 bis 150 g des Zusatzes verabfolgt.

**Revendications**

1. Composition nutritionnelle pour ruminants comprenant
a) 8 à 84% en masse du produit de réaction d'un composé, source d'azote non protéinique, et d'isobutyraldéhyde et
b) 92 à 16% en masse d'un composant constitué de 3 à 63% en masse du produit de réaction d'un composé source d'azote non protéinique et de valéraldéhyde,

5 à 51% en masse du produit de réaction d'un composé source d'azote non protéinique et d'isovaléraldéhyde et

3 à 67% en masse du produit de réaction d'un composé source d'azote non protéinique et de 2-méthyl-butyraldéhyde;
le composé source d'azote non protéinique étant choisi parmi l'ammoniaque, l'urée, l'éthanolamine, le biuret et des amines aliphatiques ayant de 1 à 5 atomes de carbone.

2. Composition conforme à la revendication 1, dans laquelle la quantité du produit de réaction (a) dérivé de l'isobutyraldéhyde est de 21 à 50% en masse et la quantité de composant (b) est de 50 à 79% en masse.

3. Composition conforme à l'une des revendications 1 ou 2, dans laquelle la quantité de chaque produit du composant (b) est d'au moins 7% en masse.

4. Composition conforme à l'une des revendications 1 ou 2, dans laquelle la quantité de chaque produit du composant (b) est d'au moins 13% en masse.

5. Aliment pour ruminants comprenant une composition conforme à l'une quelconque des revendications 1, 2, 3 ou 4.

6. Aliment conforme à la revendication 5, comprenant en outre du fourrage de maïs ensilé, du foin, du maïs en grains et de l'urée.

7. Procédé d'alimentation de ruminants consistant en l'administration, par voie orale, au ruminant, d'une composition conforme à l'une quelconque des revendications 1, 2, 3 ou 4.

8. Procédé conforme à la revendication 7, dans lequel l'alimentation de l'animal comprend, par jour, 10 à 150 g de la composition nutritionnelle.